Europäisches Patentamt

European Patent Office

Office européen des brevets

(11) Veröffentlichungsnummer: **0 062 179**
**A1**

## (12) EUROPÄISCHE PATENTANMELDUNG

(21) Anmeldenummer: **82101991.6**

(22) Anmeldetag: **12.03.82**

(51) Int. Cl.³: **C 08 J 5/24**, D 06 N 3/12,
D 04 H 1/60, D 04 H 1/64,
C 08 G 12/32, C 08 L 61/28

(30) Priorität: **26.03.81 DE 3111936**

(43) Veröffentlichungstag der Anmeldung: **13.10.82**
**Patentblatt 82/41**

(84) Benannte Vertragsstaaten: **BE CH DE FR GB IT LI NL SE**

(71) Anmelder: **CASSELLA Aktiengesellschaft, Hanauer
Landstrasse 526, D-6000 Frankfurt am Main 61 (DE)**

(72) Erfinder: **Hönel, Hans, Dr., Meerholzer Strasse 42,
D-6000 Frankfurt am Main 60 (DE)**
Erfinder: **Michel, Walter, Dr., Fuldaer Strasse 27,
D-6000 Frankfurt am Main 61 (DE)**
Erfinder: **Piesch, Steffen, Dr., An der Heide 32,
D-6370 Oberursel (DE)**
Erfinder: **Schlüter, Karin, Dieburger Strasse 12c,
D-6000 Frankfurt am Main 61 (DE)**
Erfinder: **Seidel, Manfred, Völklinger Weg 68,
D-6000 Frankfurt am Main 71 (DE)**
Erfinder: **Spieler, Wolfgang, Weissdornweg 8,
D-6238 Hofheim (DE)**

(74) Vertreter: **Urbach, Hans-Georg, Dr. et al, Hanauer
Landstrasse 526, D-6000 Frankfurt am Main 61 (DE)**

(54) **Verfestigte Gebilde aus textilen Materialien.**

(57) Verfestigte Gebilde aus textilen Materialien werden dadurch hergestellt, daß auf ein textiles Material, bezogen auf Festharz, 1 bis 250 Gew.-%, vorzugsweise 10 bis 100 Gew.-%, eines Melamin-Formaldehyd-Vorkondensats mit einem Molverhältnis Melamin:Formaldehyd = 1:(0,8 bis 1,26), vorzugsweise 1:(1,01 bis 1,2), in flüssiger oder fester Form, gegebenenfalls in Gegenwart von 0,1 bis 5 Gew.-%, bezogen auf Festharz, eines latenten Härters aufgebracht wird und das Material, gegebenenfalls nach einer Zwischensinterung oder Zwischentrocknung, bei einem Überdruck von 1 bis 200 bar und Temperaturen von 130 bis 220 °C verpreßt und gegebenenfalls dabei gleichzeitig dreidimensional verformt wird.

## Verfestigte Gebilde aus textilen Materialien

Verfestigte Gebilde aus textilen Materialien können dadurch
hergestellt werden, daß auf das Fasermaterial ein duroplastisch aushärtbares Bindemittel in flüssiger oder fester Form
aufgebracht und das Gebilde, gegebenenfalls nach einer Trocknung, der Einwirkung von erhöhter Temperatur und erhöhtem
Druck ausgesetzt wird. Dabei härtet das Bindemittel durch duroplastische Vernetzung aus und bewirkt eine Verfestigung des
Fasermaterials. Die Einwirkung erhöhter Temperatur und erhöhten Drucks kann auch mit einem Verformungsprozeß verbunden
werden.

Geeignete Bindemittel sind zum Beispiel Vorkondensate des
Formaldehyds mit Phenolen, mit Harnstoff oder mit Melamin.
Auch vernetzbare Epoxyde oder Isocyanate können als derartige
Bindemittel verwendet werden. Bindemittel auf der Basis von
Phenol-Formaldehyd-Vorkondensaten verleihen den damit hergestellten verfestigten Faserstoffgebilden einen Geruch nach
Phenol, eine oft störende Eigenfärbung und eine leichte Brennbarkeit, so daß die Verwendung derartiger Bindemittel nur auf
Anwendungsgebiete beschränkt ist, bei denen die vorgenannten
Eigenschaften toleriert werden können. Bei den Bindemitteln
auf der Basis von Aminoplastharzen wird nach der Verfestigung
des Gebildes noch langsam und stetig Formaldehyd frei, was
einerseits Schwund verursacht, andererseits aber auch aus
physiologischen Gründen für viele Gebiete den Einsatz derartiger Bindemittel verbietet. Epoxyde und Isocyanate sind Zweikomponentensysteme und entsprechend schwierig zu verarbeiten.

Es wurde nun gefunden, daß sich verfestigte Gebilde aus textilen Materialien, die durch Aufbringung eines Melamin-Formaldehyd-Vorkondensates und anschließende Einwirkung von erhöhter Temperatur und erhöhtem Druck verfestigt worden sind
und sich durch einen extrem geringen Gehalt an freiem oder
frei werdendem Formaldehyd auszeichnen, herstellen lassen, wenn als Melamin-Formaldehyd-Vorkondensat ein solches mit
einem Mol-Verhältnis Melamin : Formaldehyd = 1 : (0,8 bis
1,26), vorzugsweise 1 : (1,01 bis 1,2), verwendet wird.

Melamin-Formaldehyd-Vorkondensate mit einem Molverhältnis
Melamin : Formaldehyd = 1 : (0,8 bis 1,26), vorzugsweise
1 : (1,01 bis 1,2), lassen sich dadurch herstellen, daß Melamin in wäßriger Lösung bzw. Suspension mit Formaldehyd im
Molverhältnis 1 : (0,8 bis 1,26), vorzugsweise 1 : (1,01
bis 1,2), bei einem pH-Wert von 7 bis 11, vorzugsweise 7,5
bis 10,5, auf Temperaturen von $105^{\circ}$ bis $160^{\circ}C$, vorzugsweise
110 bis $130^{\circ}C$, erhitzt wird.

Die nach der vorliegenden Erfindung als Bindemittel verwendeten Harze können auch modifiziert sein. Die Modifizierung geschieht wie bei der Herstellung anderer modifizierter Harze
dadurch, daß an sich bekannte Modifizierungsmittel einzeln
oder im Gemisch miteinander vor, während oder nach beendeter
Kondensation zugesetzt werden. Geeignete Modifizierungsmittel
sind beispielsweise: Carbonsäureamide, wie Acetamid, Propionamid, Benzamid; Sulfonamide, wie Benzolsulfonamid, p-Toluolsulfonamid; Glykole, wie Ethylenglykol, Propylenglykol-1,2
und Propylenglykol-1,3, Butandiol-1,2, Butandiol-1,3 und
Butandiol-1,4; telomere Glykole, wie z.B. Diethylenglykol,
Triethylenglykol, Tetraethylenglykol, Dipropylenglykol, Tripropylenglykol, Tetrapropylenglykol; Polyglykole; ferner
Polyglyzerin; Trimethylolpropan; Pentaerythrit; Zucker, wie
Glucose; polymere Zucker, wie z.B. Stärke oder deren Derivate;
Glykolether, wie Propylenglykolmonoethylether, Dipropylenglykolmonoethylether, Tripropylenglykolmono-methyl- oder
-ethylether; ferner Alkolhole, wie Methanol, Ethanol;
Lactame, wie $\mathcal{E}$-Caprolactam; Methylenbisformamid; Umsetzungsprodukt aus Formaldehyd, Formamid und $\mathcal{E}$-Caprolactam; Methylen-
bis-acrylamid; Alkali- oder Erdalkalisalze der Amidosulfosäure,
insbesondere das Natriumsalz der Amidosulfosäure. Als Modifizierungsmittel können auch andere Aminoplastbildner und ihre
Derivate allein oder im Gemisch miteinander, zum Beispiel Harn-

- 3 -   Ref. 3211 0062179

stoff, Thioharnstoff, Propylenharnstoff, Ethylenharnstoff, Glyoxalharnstoff, Acetoguanamin, Formoguanamin, Benzoguanamin, Adipo-bisguanamin etc. verwendet werden. Bezogen auf das Gesamtgewicht des eingesetzten Melamins und Formaldehyds (Formaldehyd 100%ig gerechnet) werden 0 bis 25 Gew.%, vorzugsweise 0 bis 15 Gew.%, Modifizierungsmittel verwendet.

Da bei der Herstellung der erfindungsgemäß verwendeten Melamin-Formaldehyd-Vorkondensate die Reaktionstemperaturen über dem Siedepunkt des Wassers liegen, wird die Kondensation in einem geschlossenen Druckgefäß (Autoklav) unter dem sich einstellenden Überdruck, zweckmäßigerweise unter Rühren, vorgenommen. Der Formaldehyd wird normalerweise in Form der üblichen 39%igen wäßrigen Lösung eingesetzt. Aber auch wäßrige Lösungen von Paraformaldehyd oder höher- oder niedriger-konzentrierte Formaldehydlösungen können eingesetzt werden. Die Konzentration des Formaldehyds in der wäßrigen Lösung des Reaktionsansatzes kann 10 bis 30 Gew.% betragen.

Der bei der Kondensation einzuhaltende pH-Wert von 7 bis 11, vorzugsweise 7,5 bis 10,5, wird durch Zusatz von geeigneten alkalisch reagierenden anorganischen oder organischen Verbindungen eingestellt. Derartige anorganische Verbindungen sind zum Beispiel Alkalihydroxide, wie Natrium-, Kalium- oder Lithiumhydroxid, oder Alkalicarbonate, wie Natrium- oder Kaliumcarbonat. Geeignete organische Verbindungen sind zum Beispiel Aminoalkohole, vorzugsweise tertiäre Aminoalkohole, wie z.B. Aminoethanol, 3-Aminopropanol, N-Methylaminoethanol, N-Ethylaminoethanol, N,N-Dimethylaminoethanol, N,N-Diethylaminoethanol, N,N-Dipropylaminoethanol, N,N-Dimethyl-, -diethyl- oder -dipropylaminopropanol. Auch Mischungen verschiedener geeigneter alkalisch reagierender Verbindungen können eingesetzt werden, wie zum Beispiel ein Gemisch aus Kaliumcarbonat und N,N-Dimethylaminoethanol. Die zur Einstellung des pH-Wertes benutzten Verbindungen können dem Reaktionsansatz selbstverständlich auch in Form einer wäßrigen Lösung zugesetzt werden. Zur Einstellung des pH-Wertes sind normalerweise zum Beispiel von den Alkalihydroxiden ca. 0,005 bis 0,1 Gew.% und den tertiären Aminoalkoholen ca. 0,5 bis 2 Gew.%, bezogen auf das Gewicht des Melamins, erforderlich.

Bei der Herstellung der erfindungsgemäß zu verwendenden Melamin-Formaldehyd-Vorkondensate tritt bei den angegebenen Reaktionsbedingungen auch ohne Zusatz von Modifizierungsmitteln eine verhältnismäßig rasche Auflösung des Melamins ein. Nach Erreichen der Kondensationstemperatur ist das Melamin schon nach 5 bis 10 Minuten aufgelöst. Nach der Auflösung des Melamins nimmt bei weiterer Kondensation die Wasserverdünnbarkeit des Ansatzes ab.

Wenn bei der Herstellung der erfindungsgemäß verwendeten Melamin-Formaldehyd-Vorkondensate zur Modifizierung ein Alkali- oder Erdalkalisalz der Amidosulfosäure in Mengen von weniger als 1 Gew.%, bezogen auf das Gesamtgewicht Melamin + Formaldehyd (100%ig), zur Anwendung kommt, dann wird normalerweise so lange weiterkondensiert, bis die fertige Harzlösung eine Wasserverdünnbarkeit von 1 : (0,1 bis 4), vorzugsweise 1 :(0,1 bis 3,5), erreicht hat. Bei der Bestimmung der Wasserverdünnbarkeit wird bekanntlich ein abgemessenes Volumen Harz bei einer Temperatur von 20°C bis zum Auftreten einer dauernden Trübung mit Wasser titriert. Die Angabe Wasserverdünnbarkeit 1 : 0,1 besagt somit zum Beispiel, daß beim Vermischen von 1 Volumenteil Harz mit 0,1 Volumenteil Wasser eine dauernde Trübung eintritt. Wenn man ein Harz mit einer Wasserverdünnbarkeit von zum Beispiel 1 : 0,1 herstellen will, darf man jedoch nicht so lange kondensieren, bis eine Harzprobe diese Wasserverdünnbarkeit zeigt, sondern man muß die Kondensation bereits vorher durch rasche Erniedrigung der Temperatur abbrechen, weil während der Abkühlung noch eine Nachkondensation eintritt. Die Wasserverdünnbarkeit, bei der die Kondensation abzubrechen ist, kann leicht durch Vorversuche bestimmt werden.

Wenn bei der Herstellung der erfindungsgemäß verwendeten Melamin-Formaldehyd-Vorkondensate zur Modifizierung ein Alkali- oder Erdalkalisalz der Amidosulfosäure in Mengen von mehr als 7,5 Gew.%, bezogen auf das Gesamtgewicht Melamin + Formaldehyd (100%ig), zur Anwendung kommt, dann kann auch so lange kondensiert werden, bis eine unbegrenzte Wasserverdünnbarkeit erreicht ist. Bei einer Modifizierung mit Salzen der Amidosulfosäure in Mengen von 1 bis 7,5 Gew.% hängt es von der Art und Menge der übrigen Modifizierungsmittel ab, ob eine unbegrenzte Wasserverdünnbarkeit erreicht werden kann. Gegebenenfalls wird auch in diesen Fällen auf eine Wasserverdünnbarkeit von 1 : (0,1 bis 4), vorzugsweise von 1 : (0,1 bis 3,5) kondensiert.

Im allgemeinen werden bei der Herstellung der erfindungsgemäß zu verwendenden Harze die Konzentrationen der Ausgangskomponenten so gewählt, daß etwa 50%ige Harzlösungen entstehen. Die erhaltenen Harzlösungen können direkt als Bindemittel verwendet werden, sie können jedoch auch vorteilhafterweise bis zur Anwendung in feste Form überführt werden. Dies geschieht durch Trocknung nach üblichen Methoden, zum Beispiel unter vermindertem Druck bei 50°C. Die Sprühtrocknung ist besonders vorteilhaft, weil dabei gleichzeitig auch eine Pulverisierung des Harzes eintritt. Vorteilhaft für die Sprühtrocknung ist es, daß die entstehenden Pulverharze, auch wenn sie hochmodifiziert sind, hohe Erweichungspunkte besitzen.

Als Ausgangsmaterial für die erfindungsgemäßen, verfestigten Gebilde aus textilen Materialien sind Gewebe, Gewirke, Gestricke, Vliese, Matten, Filze und dergleichen aus natürlichen oder synthetischen anorganischen, insbesondere aber aus organischen Materialien, geeignet. Geeignete anorganische Materialien sind zum Beispiel Glas-, Quarz-, Stein- oder Schlackenwolle, Fasern aus Asbest oder Graphit. Geeignete organische Materialien sind zum Beispiel Cellulose, Wolle, Seide, Polyamid, Polyester, Polypropylen, Polyacrylnitril. Die Materialien liegen in den zu verfestigenden textilen Materialien in flächiger Ausdehnung, mit Dicken bis zu einigen Zentimetern vor.

In den zu verfestigenden Gebilden können die Materialien in Form von Fäden, wie zum Beispiel in Gewirken, Gestricken oder Wirrvliesen, in Form von Fasern oder Bändchen, wie zum Beispiel in Filzen, Vliesen oder Matten, oder in Form von Flokken oder Schnitzeln, wie zum Beispiel in Reißwollbahnen, vorliegen.

Auf das zu verfestigende Gebilde, das in Stückform oder in Form einer unendlichen Bahn vorliegt, wird das erfindungsgemäß zu verwendende Bindemittel in Form eines Pulvers oder Granulats oder einer Lösung aufgebracht. Die Lösung kann direkt aus der Herstellung der Melamin-Formaldehyd-Vorkondensate stammen, oder sie kann durch Wiederauflösen des Pulverharzes in Wasser oder einem niederen Alkohol erhalten werden. Normalerweise kommen 1 bis 60 gew.%ige wäßrige, alkoholische oder wäßrig/alkoholische Lösungen des Bindemittels zur Anwendung. Auf das zu verfestigende, gegebenenfalls in vorfestigter Form vorliegende, Gebilde werden, bezogen auf Festharz, normalerweise 1 bis 250 Gew.%, vorzugsweise 10 bis 100 Gew.%, Bindemittel aufgebracht. Bei Verwendung eines Pulverharzes oder Granulats erfolgt die Aufbringung zum Beispiel durch Aufpudern oder Aufstäuben, bei Verwendung einer Lösung des Bindemittels durch Aufspritzen, Aufsprühen, Aufpflatschen, Aufschäumen, Aufrakeln oder Tränken. Falls keine Tränkung erfolgt, kann das Bindemittel auf eine oder beide Oberflächen des flächigen Gebildes aufgebracht werden.

Die erfindungsgemäß zu verwendenden Bindemittel zeigen bei der Verarbeitung ein hohes Fließvermögen, sind jedoch weniger reaktiv als Harze mit höherem Formaldehydanteil. Deshalb ist es normalerweise zweckmäßig, dem aufzubringenden Bindemittel an sich bekannte latent wirkende Härter zuzusetzen, um bei der späteren Aushärtung die Härtungsgeschwin-

0062179

digkeit zu beschleunigen. Derartige latente Härter sind
latente Säurespender, das heißt Verbindungen, die unter den
Bedingungen der Aushärtung der Harze sauer wirkende Stoffe
abspalten. Geeignete Härter sind zum Beispiel: Melaminsalze
organischer Säuren, wie zum Beispiel Melaminphthalat,
Melaminoxalat, Melaminacetat; das Morpholinsalz der p-Toluolsulfonsäure; Arylsulfonsäureester, wie zum Beispiel p-Toluolsulfonsäure-methyl-, -ethyl-, oder -phenyl-ester; Anhydride
organischer Säuren,wie Bernsteinsäure-anhydrid; Phthalsäureanhydrid, Maleinsäure-anhydrid, Benzoltetracarbonsäure-anhydrid; Polyphosphorsäureester; Chloride, Nitrate, Tosylate
und Sulfate zum Beispiel von Magnesium, Ammonium oder Zink
oder von flüchtigen organischen Basen, wie Hydrazin, tertiären
Aminen, Aminoalkoholen oder deren Derivaten; ferner Alkalisalze aliphatischer Halogencarbonsäuren, wie zum Beispiel das
Natriumsalz der Chloressigsäure oder der β-Chlorpropionsäure
etc. Die latenten Härter können dem Pulverharz oder der aufzubringenden Lösung zugemischt werden. Es ist aber auch möglich, latente Härter bei der Herstellung der Harzlösung
oder vor ihrer Überführung in das Pulverharz zuzufügen. Normalerweise kommen 0,1 bis 5 Gew.% Härter, bezogen auf Festharz, zur Anwendung.

Auf das zu verfestigende Gebilde können, entweder zusammen
mit dem erfindungsgemäß anzuwendenden Bindemittel oder in
einem getrennten vor- oder nachgeschalteten Vorgang, noch
andere Bindemittel, Füllstoffe, Farbstoffe, Pigmente und
Hilfsmittel aufgebracht werden. Andere Bindemittel sind zum
Beispiel Polymerdispersionen, wie etwa Acrylsäureester-Copolymere, Vinalacetat-, Mono- oder Copolymere, Butadien-Styrol-
Copolymere, Butadienacrylnitril-Copolymere, Vinylchlorid-
Copolymere, Vinylidenchlorid-Copolymere, andere Aminoplastharze, Chloropren oder Naturkautschuk.

Geeignete Füllstoffe sind beispielsweise Holzmehl, Cellulosepulver, Celluloseesterpulver, Gesteinsmehl, Glasmehl, Baumwollflocken, Baumwollfasern, Baumwollgewebeschnitzel, Mehl,
Stärke, Torf, Asbestfasern, Glimmer oder Graphit, Pigmente können organisch oder anorganisch sein. Geeignete anorganische Pigmente basieren im allgemeinen auf Sulfiden, Oxiden oder Mischoxiden von Metallen, insbesondere von Titan, Zink, Eisen, Chrom, Kobalt, Blei und Cadmium. Ein bevorzugtes schwarzes Pigment ist Ruß. Als organische Pigmente kommen die im Colourindex als Pigment Dyes gekennzeichneten Verbindungen in Betracht.

Hilfsmittel können zum Beispiel Fließhilfsmittel, Gleit- oder Trennmittel, Hydrophobierungs- oder Oleophobierungsmittel, ferner Mittel zur Flammfestausrüstung oder Antistatika sein.

Bekannte Fließhilfsmittel sind zum Beispiel Sorbit, Glykole und Glykolderivate sowie Polyglykole. Als Gleit- oder Trennmittel, die gegebenenfalls für die einwandfreie Ablösung des verfestigten Körpers von der Preßform erforderlich sind, werden Metallstearate, vorzugsweise Zink-, Lithium-, Calcium- und Magnesiumstearat, eingesetzt. Hydrophobierungsmittel sind zum Beispiel handelsübliche Paraffin- und Polysiloxanemulsionen. Mittel für die Flammfestausrüstung sind z.B. Tetrahydroxymethylphosphoniumchlorid oder Kombinationen aus halogenhaltigen Polymerisaten und Antimonoxyd, sowie Phosphinsäurederivate. Oleophobierungsmittel sind zum Beispiel handelsübliche fluorhaltige Copolymerdispersionen.

Wenn das erfindungsgemäß anzuwendende Bindemittel in Form eines Pulvers oder Granulats auf das zu verfestigende Material aufgebracht worden ist, ist es in der Regel zweckmäßig, es vor dem eigentlichen Verfestigungsvorgang auf dem zu verfestigenden Material anzusintern. Dieses Ansintern erfolgt durch Einwirkung von Hitze, z.B. von Temperaturen von 100 bis 200°C, insbesondere von 100 bis 160°C, während einer Zeitspanne von normalerweise bis zu 3 Minuten, vorzugsweise 30 bis 90 Sekunden. Bei dickeren Materialien können längere Zeiten, z.B. bis zu 10 Minuten, erforderlich werden. Wenn das erfindungsgemäß anzuwendende Bindemittel in Form einer Lösung auf das zu verfestigende Material aufgebracht worden ist, ist vor dem eigentlichen Verfestigungsvorgang eine Zwischentrocknung, z.B. durch Heißluft oder Infrarotstrahlung, zweckmäßig. Nach dem gegebenenfalls erfolgten Ansintern oder der gegebenenfalls erfolgten Zwischentrocknung wird das Flächengebilde, auf welches das erfindungsgemäß anzuwendende Bindemittel und gegebenenfalls die anderen Füll- und Zusatzstoffe aufgebracht worden sind zur Verfestigung einer Temperatur von 130 bis 220°C, vorzugsweise 150 bis 180° C, und einem Überdruck von 1 bis 200 bar, vorzugsweise 2 bis 100 bar, ausgesetzt.Bis zur Beendigung der duroplastischen Vernetzung des Bindemittels sind dabei Zeiten von 30 Sekunden bis zu 20 Minuten, vorzugsweise von 1 bis 4 Minuten, erforderlich. Die Verfestigung kann durch Anwendung geeigneter Preßformen mit einer dreidimensionalen Verformung des Gebildes kombiniert werden. Auf diese Weise lassen sich ebene und dreidimensional verformte verfestigte Gebilde mit einer Dicke bis zu einigen Zentimetern herstellen. Die Abmessungen des zu verfestigenden Materials sind durch die Abmessungen der Presse begrenzt. Bahnförmiges Material wird daher vorher entsprechend aufgeteilt. Je nach den Verarbeitungsbedingungen, insbesondere der zur Anwendung kommenden Bindemittelmenge, können der Oberflächencharakter und die Starrheit des verfestigten Gebildes in weiten Grenzen variiert werden. Bei geringen Bindemittelmengen wird nur eine geringe Verfestigung erreicht, und der ursprüngliche textile Oberflächencharakter bleibt weitgehend erhalten, während bei zunehmenden Bindemittelmengen auch eine zunehmende Verfestigung und eine zunehmend geschlossenere, das heißt glattere Oberfläche erreicht wird.

Es ist auch möglich, mehrere Flächengebilde mit Bindemittel zu behandeln und dann gegeneinander oder mit anderen Flächengebilden zu verpressen.

Die nach der vorliegenden Erfindung herstellbaren Formteile lassen sich zum Beispiel verwenden als formstabile flächige und dreidimensional verformte Innen-, Außen-,
Isolier- und Schutzverkleidungen, sowie als Abdeckungen und
Abtrennungen mit textilem und nicht textilem Charakter,
als Wannen und Behälter, z.B. in Verkehrsmitteln, im Innenausbau von Gebäuden, sowie in der Möbel- und Verpackungsindustrie, d.h. überall dort, wo chemisch, mechanisch und
thermisch stabile, physiologisch unbedenkliche Flächen- und
Formteile benötigt werden.

Die erfindungsgemäßen verfestigten Gebilde zeichnen sich
durch einen niedrigen Gehalt an freiem bzw. frei werdendem
Formaldehyd auf der Ware aus, ferner durch hervorragende
mechanische, chemische und thermische Stabilitäten, wie
zum Beispiel hohe Festigkeiten, hohe Beständigkeit gegen
Wasser und Lösungsmittel, sowie verminderte Brennbarkeit.

An Hand der nachfolgenden Beispiele wird die Erfindung weiter
erläutert. Angegebene Prozente sind Gewichtsprozente.

## Beispiel 1

In einem druckfesten Rührbehälter aus rostfreiem Stahl wurden 1850 kg Melamin, 1356 kg wäßriger Formaldehyd 39%ig,
(Molverhältnis Melamin : Formaldehyd = 1 : 1,2) 1553 kg Kondenswasser und 357 kg eines Gemischs aus ca. 70% Ethyldiglykol, 20% Ethyltriglykol und 10% Ethyltetraglykol und
1,6 kg Kaliumhydroxid vorgelegt. Der pH-Wert der Mischung
betrug 10,0.
Dann wurde die Mischung erhitzt und bei 112 bis 115°C und
ca. 1 bis 2,5 bar Überdurck gerührt, bis eine Wasserverdünnbarkeit von 1 : 5 erreicht war. Dann wurde auf 45°C abgekühlt und 28 kg einer 73%igen Lösung von Morpholin-Tosylat
in Wasser zugesetzt. Die Wasserverdünnbarkeit betrug jetzt
1 : 2. Die Lösung wurde in einem Zerstäubungstrockner bei
155 bis 160°C Lufttemperatur versprüht. Es wurde ein farbloses Pulverharz mit einem Erweichungsbereich von 102 bis
112°C erhalten.

## Beispiel 2

In einem druckfesten Rührbehälter aus rostfreiem Stahl wurden
6000 g Melamin, 4396 g wäßriger Formaldehyd 39%ig (Molverhältnis Melamin : Formaldehyd 1 : 1,2), 8889 g entsalztes
Wasser, 1449 g Natriumsalz der Amidosulfonsäure und 5,2 g
Kaliumhydroxid vorgelegt. Der pH-Wert der Mischung betrug
9,9. Dann wurde die Mischung erhitzt und bei 113°C und ca.
1,3 bar Überdruck gerührt  bis eine unbegrenzte Wasserverdünnbarkeit erreicht war.  Dann wurde abgekühlt und die
Lösung in einem Zerstäubungstrockner wie im Beispiel 1 zu
einem Pulverharz versprüht.

## Beispiel 3

In einem druckfesten Rührbehälter aus rostfreiem Stahl wurden
6000 g Melamin, 4396 g wäßriger Formaldehyd 39%ig (Molverhältnis Melamin : Formaldehyd 1 : 1,2), 5032 g entsalztes
Wasser, 5,2 g Kaliumhydroxid und 1158 g eines Gemischs aus
ca. 70% Ethyldiglykol, 20% Ethyltriglykol und 10% Ethyltetraglykol vorgelegt. Der pH-Wert der Mischung betrug
10,5. Dann wurde die Mischung erhitzt und bei 115°C und
ca. 0,8 bis 1,0 bar Überdruck gerührt, bis eine Wasserverdünnbarkeit von 1 : 4 erreicht war. Dann wurde abgekühlt, die
Wasserverdünnbarkeit betrug jetzt 1 : 0,24, und die Lösung
wurde bei 50°C im Vakuum getrocknet und anschließend pulverisiert.

## Beispiel 4

In einem druckfesten Rührbehälter aus rostfreiem Stahl wurden 7037 g Melamin, 5156 g wäßriger Formaldehyd 39%ig (Molverhältnis Melamin : Formaldehyd 1 : 1,2), 5902 g entsalztes
Wasser, 6,1 g Kaliumhydroxid, 453 g eines Gemischs aus ca.
70% Ethyldiglykol, 20% Ethyltriglykol und 10% Ethyltetraglykol und 453 g p-Toluolsulfonamid vorgelegt. Der pH-
Wert der Mischung betrug 9,5. Dann wurde die Mischung erhitzt
und bei 110 bis 117°C und ca. 1,4 bis 1,6 bar Überdruck gerührt, bis eine Wasserverdünnbarkeit von 1 : 1,0 erreicht war.
Dann wurde abgekühlt, die Wasserverdünnbarkeit betrug jetzt
1 : 0,43, und die Lösung wie im Beispiel 1 zu einem Pulverharz versprüht.

## Beispiel 5

In einem druckfesten Rührbehälter aus rostfreiem Stahl wurden 3000 g Melamin, 2198 g wäßriger Formaldehyd 39%ig (Mol- verhältnis Melamin : Formaldehyd 1 : 1,2), 4445 g entsalztes
Wasser, 1149 g Natriumsalz der Amidosulfosäure, 2,6 g Kaliumhydroxid, 579 g eines Gemisches aus 70% Ethyldiglykol, 20%
Ethyltriglykol und 10% Ethyltetraglykol sowie 193 g Butandiol-
(1,4) vorgelegt. Der pH-Wert der Mischung betrug 10,0. Dann
wurde die Mischung erhitzt und bei 110 bis 111°C und ca. 1,2
bar Überdruck gerührt, bis eine unbegrenzte Wasserverdünnbarkeit erreicht war. Dann wurde abgekühlt und die Lösung in
einem Zerstäubungstrockner wie im Beispiel 1 zu einem Pulverharz versprüht.

Beispiel 6

In einem druckfesten Rührbehälter aus rostfreiem Stahl wurden 3000 g Melamin, 1465 g wäßriger Formaldehyd 39%ig (Molverhältnis Melamin : Formaldehyd 1 : 0,8), 2677 g destilliertes Wasser, 536 g eines Gemischs aus 70% Ethyldiglykol
20% Ethyltriglykol und 10% Ethyltetraglykol, 179 g p-
Toluolsulfonamid und 2,9 g Kaliumhydroxid vorgelegt. Der
pH-Wert der Mischung betrug 9,6. Die Mischung wurde ca. 3 Minuten lang auf 127°C bei einem Überdruck von 2,5 bar erhitzt,
bis eine Wasserverdünnbarkeit von 1 : 1 erreicht war. Dann
wurde abgekühlt, die Wasserverdünnbarkeit betrug nun 1 : 0,2,
und die Lösung wie im Beispiel 1 angegeben zu einem Pulverharz versprüht.

Beispiel 7

In einem druckfesten Rührbehälter aus rostfreiem Stahl wurden 3000 g Melamin, 1648 g wäßriger Formaldehyd 39%ig (Molverhältnis Melamin : Formaldehyd 1 : 0,9), 2638 g destilliertes Wasser, 182 g eines Gemischs aus 70% Ethyldiglykol,
20% Ethyltriglykol, 10 % Ethyltetraglykol, 182 g p-
Toluolsulfonamid und 2,6 g Kaliumhydroxid vorgelegt. Der
pH-Wert der Mischung betrug 9,9. Die Mischung wurde dann ca.
3 Minuten lang bei 123° C und einem Überdruck von 2,3 bar
erhitzt. Nach dem Abkühlen betrug die Wasserverdünnbarkeit
des Harzes 1 : 0,4. Die Lösung wird wie im Beispiel 1
angegeben zu einem Pulverharz versprüht werden.

Beispiel 8

In einem druckfesten Rührbehälter aus rostfreiem Stahl wurden
3000 g Melamin, 2198 g wäßriger Formaldehyd 39%ig (Molverhältnis Melamin : Formaldehyd 1 : 1,2), 2516 g destilliertes
Wasser und 2,6 g Kaliumhydroxyd vorgelegt. Der pH-Wert der
Mischung betrug 10,1. Die Mischung wurde 18 Minuten bei 117
bis  120 °C und einem Überdruck von 1,7 bar erhitzt. Die
Wasserverdünnbarkeit nach dem Abkühlen betrug 1 : 0,1.
Die Lösung wurde wie bei Beispiel 1 angegeben zu einem Pulverharz versprüht.

Beispiel 9

In einem druckfesten Rührbehälter aus rostfreiem Stahl wurden
3000 g Melamin, 1923 g wäßriger Formaldehyd 39%ig (Molverhältnis Melamin : Formaldehyd 1 : 1,05), 2577 g destilliertes
Wasser, 376 g eines Gemischs aus 70% Ethyldiglykol, 20%
Ethyltriglykol und 10% Ethyltetraglykol, 188 g p-Toluolsulfonamid und 2,4 g Kaliumhydroxyd vorgelegt. Der pH-Wert
der Mischung betrug 9,7. Die Mischung wurde danach ca. 6 Minuten bei 114°C und einem Überdruck von 1,5 bar erhitzt. Die
 Wasserverdünnbarkeit nach dem Abkühlen betrug 1 : 0,8.
Die Lösung wurde wie im Beispiel 1 angegeben zu einem Pulverharz versprüht.

Beispiel 10

In einem druckfesten Rührbehälter aus rostfreiem Stahl wurden
3000 g Melamin, 2198 g wäßriger Formaldehyd 39%ig (Molverhältnis Melamin : Formaldehyd 1 : 1,2), 4445 g destilliertes Wasser, 725 g einer 40%igen wäßrigen Lösung des Natriumsalzes der Amidosulfosäure, 386 g eines Gemisches aus 70%
Ethyldiglykol, 20% Ethyltriglykol und 10% Ethyltetraglykol, 2,6 g Ätzkali vorgelegt. Der pH-Wert der Mischung
betrug 9,7. Dann wurde die Mischung erhitzt und ca. 19 Minuten bei 112°C gerührt. Nach dem Abkühlen besaß die Lösung
eine Wasserverdünnbarkeit von 1 : 1 und war mehrere Wochen
haltbar.

Beispiel 11

Ein 300 g/m$^2$ schweres Polyester-Wirrvlies (PES-spun-bonded)
wurde mit einer Wasser/n-Propanol-Lösung (Volumenverhältnis
1 :1) imprägniert, die im Kilogramm 450 g des Pulverharzes
gemäß Beispiel 3 und 25 g einer 35%igen wäßrigen Lösung von 1-Amino-2-methyl-2-hydroxypropan als Härter , enthielt.
Die Naßauflage bei der Imprägnierung betrug 140%, anschliessend wurde bei 110°C auf eine Restfeuchte von 3 bis 4% getrocknet. Zwei der so behandelten Flächengebilde wurden bei
160°C 4 Minuten lang mit einem Druck von 50 bar auf 1 mm
Preßdicke gegeneinander verpreßt.
Es resultierte ein verfestigtes Material, das sich hervorragend als Außenverkleidungsmaterial im Fahrzeugbau eignet.

## Beispiel 11a

Das obige Beispiel 11 wurde unter Verwendung eines handelsüblichen unveretherten Melamin-Formaldehyd-Pulverharzes mit
einem Molverhältnis Melamin : Formaldehyd 1 : 1,8 wiederholt, das mit 6% Saccharose modifiziert war und in 50%iger
Lösung eine Wasserverdünnbarkeit von 1 : 0,6 besaß.

## Beispiel 11b

Das obige Beispiel 11 wurde unter Verwendung eines handelsüblichen unveretherten Melamin-Formaldehyd-Pulverharzes mit eieinem Molverhältnis Melamin : Formaldehyd 1 : 1,7 wiederholt,
das mit 5% Phenoxyethanol modifiziert war und in 50%iger
Lösung eine Wasserverdünnbarkeit von 1 : 1,3 besaß.

## Beispiel 11c

Das obige Beispiel 11 wurde unter Verwendung eines handelsüblichen veretherten Melamin-Formaldehyd-Flüssigharzes mit
einem Molverhältnis Melamin : Formaldehyd : $OCH_3 = 1 : 2,2 :$
1,3 wiederholt.

## Beispiel 11d

Das obige Beispiel 11 wurde unter Verwendung eines handelsüblichen veretherten Melamin-Formaldehyd-Flüssigharzes mit
einem Molverhältnis Melamin : Formaldehyd : $OCH_3 = 1 : 3,4 :$
2,3 wiederholt.

An den nach den Beispielen 11 bis 11d erhaltenen Produkten
wurde der Formaldehydgehalt auf der Ware und die Reißfestigkeit bestimmt.
Die Bestimmung des Formaldehydgehalts erfolgte nach der AATCC-Methode 112-75 (AATCC = American Association of Textile
Chemists and Colorists).

Ergänzend hierzu wurde diese Methode noch dahin abgewandelt,
daß die Prüflinge über Wasser in einem geschlossenen System
bei 80°C gelagert wurden, die übrigen Bedingungen aber unverändert beibehalten wurden. Diese so abgewandelte, verschärfte Methode wird nachfolgend als AATCC Methode 112-75,
80°C, bezeichnet.

Die Bestimmung der Reißfestigkeit erfolgte in diesem und in
den nachfolgenden Beispielen auf einer Zugprüfmaschine , wobei
die Form des Probenkörpers der DIN 53571 entsprach. Die Durchführung des Zugversuches wurde nach DIN 53857/1 bei einer
Probenbreite von 20 mm, einer Meßlänge von 50 mm und einer
Prüfgeschwindigkeit von 100 mm/min durchgeführt. Die Reißfestigkeit der Materialien wurde auch nach einer zweimaligen
Maschinenkochwäsche bei 90°C in einer üblichen Haushaltstrommelwaschmaschine mit einem Fassungsvermögen von 5 kg
in Gegenwart eines handelsüblichen Haushaltswaschmittels
vorgenommen. Der Waschmittelzusatz betrug 10g/l. Anschliessend wurde gespült und getrocknet.

Die erhaltenen Werte für den Formaldehydgehalt und die Reißfestigkeit sind in der Tabelle 1 angegeben.

### T a b e l l e  1

Formaldehydgehalt auf der Ware in ppm und Reißfestigkeit
in daN.

| Produkt gemäß Beispiel | 11 | 11a | 11b | 11c | 11d |
|---|---|---|---|---|---|
| Formaldehyd in ppm gemäß | | | | | |
| AATCC 112-75 | 480 | 1370 | 1010 | 2350 | 3380 |
| AATCC 112-75 80°C | 2350 | 8000 | 8000 | 8000 | 8000 |
| Reißfestigkeit in daN | | | | | |
| zu Beginn | 95,9 | 87,4 | 84,6 | 99,1 | 93,2 |
| nach zweimaliger Maschinenwäsche 90°C | 95,1 | 85,2 | 83,8 | 98,3 | 86,2 |

Aus der Tabelle 1 ist zu ersehen, daß sich das erfindungsgemäße Formteil gemäß Beispiel 11 durch deutlich niedrigere Anteile an freiem bzw. frei werdendem Formaldehyd auf der Ware
und durch eine gute waschbeständige Verfestigung auszeichnet.
Wenn das Beispiel 11 mit Harzen gemäß den Beispielen 6, 7 oder
9 wiederholt wurde, dann wurden Formteile mit noch etwas
günstigeren Formaldehydgehalten auf der Ware erhalten.

Beispiel 12

Das nach Beispiel 1 hergestellte Pulverharz wurde möglichst
gleichmäßig auf ein 1400 g/m$^2$ schweres Bahnmaterial aus überwiegend cellulosefaserstoffhaltigem Flockmaterial aufgestäubt.
Die Auftragmenge bezogen auf das Fasermaterial betrug 50 Gew.%.
Dann wurde das Harzpulver 3 Minuten lang bei 160°C angesintert und das Material dann 4 Minuten lang in einer Rahmenpresse bei 180°C und einem Druck von 20 bar auf eine Schichtdicke von 1,5 mm verpreßt.
Das erhaltene Produkt ist zur Verwendung als Innen- und
Schutzverkleidung geeignet.
Das verfestigte Flächengebilde zeichnet sich durch ein hohes
Maß an Festigkeit bei guten Permanenzen gegenüber Wasser und
Lösungsmitteln, durch sehr gute Thermostabilität und insbesondere durch einen niedrigen Gehalt an freiem bzw. freiwerdendem Formaldehyd auf dem Material aus. Die Reißfestigkeit
wurde nach der bereits beschriebenen Methode bestimmt. Sie
betrug 98 daN, nach zweimaliger Maschinenkochwäsche wie beschrieben 96 daN.

Beispiel 12a

Das Beispiel 12 wurde mit einem handelsüblichen pulverförmigen unveretherten Melaminharz mit einem Molverhältnis
Melamin : Formaldehyd 1 : 1,65 wiederholt, das mit 4,2% Sorbit
modifiziert war und in 50%iger Lösung eine Wasserverdünnbarkeit von 1 : 1,1 besaß.
An den nach den Beispielen 12 und 12a erhaltenen Produkten
wurde der Formaldehydgehalt auf der Ware bestimmt. Zusätzlich
zu den beiden bereits genannten Methoden wurde noch die
Methode gemäß dem japanischen Law Nr. 112-73 herangezogen.
Die erhaltenen Werte sind in Tabelle 2 angegeben.

T a b e l l e   2

Formaldehyd in ppm auf der Ware

| Name der Methode | Beispiel 12 | Beispiel 12a |
|---|---|---|
| Japan. Law Nr. 112-73 | 180 | 320 |
| AATCC 112-75 | 490 | 1000 |
| AATCC 112-75, 80°C | 1790 | 8000 |

## Beispiel 13

Das nach Beispiel 4 hergestellte Pulverharz wurde mit 1 Gew.%
Morpholinsalz der p-Toluolsulfonsäure als Härter gemischt
und dieses Gemisch möglichst gleichmäßig auf das auch mit
Beispiel 12 verwendete Material aufgestreut. Die Auftragmenge, bezogen auf das Fasermaterial, betrug 40 Gew%. Anschließend wurde 3 Minuten lang bei 160°C und bei einem
Druck von 10 bar auf eine Schichtdicke von 2 mm verpreßt.
Das erhaltene verfestigte Material eignet sich als Isolier-
und Abdeckmaterial im  Fahrzeugbau.
Nach dem bereits beschriebenen Methoden wurde der Formaldehydgehalt auf der Ware und die Reißfestigkeit bestimmt.
Dabei wurden folgende Ergebnisse erhalten:

### T a b e l l e   3

Formaldehyd in ppm auf der Ware

| Japn. Law 112-73 | 150 |
|---|---|
| AATCC 112-75 | 860 |

| Reißfestigkeit in daN | |
|---|---|
| zu Beginn | 52,2 |
| nach einer zweimaligen Maschinenwäsche bei 90°C | 43,0. |

## Beispiel 14

Ein im Beispiel 12 benutztes Bahnmaterial wird wie im Beispiel 11 angegeben mit Harzpulver bestäubt  und zusammen mit
einem mechanisch vorverfestigten und ausgerüsteten 300 $g/m^2$
schweren Nadelfilz unter den im Beispiel 12 angegebenen
Bedingungen gegeneinander verpreßt.

Der Polyesternadelfilz wurde zuvor mit einem handelsüblichen Oleophobierungs/Hydrophobierungsmittel auf der Basis einer Fluorcopolymer-Dispersion und unter Mitverwendung eines hochmethylolierten, hochmethylveretherten wasserlöslichen Melaminharz (Molverhältnis Melamin : Formaldehyd 1 : 5,8, 90% der Methylolgruppen durch Methyl verethert) und Zinknitrat als Katalysator imprägniert. Die Flotte enthielt dabei 5 g/l Oleophobierungsmittel sowie 3 g/l des 50%igen Melaminharzes und 3 g/l Zinknitrat. Die Flottenaufnahme bei der Imprägnierung betrug 110 %. Anschließend wurde bei 110$^{o}$C getrocknet und danach der Nadelfilz einseitig mit dem im Beispiel 12 verwendeten Gemisch aus Pulverharz und Härter bestäubt, wobei die Auftragmenge 10 Gew.%, bezogen auf den Faserstoff, betrug. Anschließend wurde kurz bei 160$^{o}$C angesintert und danach die beiden Teile unter den im Beispiel 12 genannten Bedingungen gegeneinander verpreßt und dabei gleichzeitig dreidimensional verformt. Das verformte verfestigte Flächengebilde ist als Fahrzeughimmel im Karosseriebau geeignet und zeigt eine Oberfläche, die sich durch einen Spraywert von 80 (gemessen nach der AATCC-Methode 22-1952) und einer Ölabweisung von 5 (gemessen nach der AATCC-Methode 118-1966) auszeichnet. Wurde im obigen Beispiel das Harz gemäß Beispiel 1 durch ein Harz gemäß den Beispielen 8, 9 oder 10 plus Härter ersetzt, dann wurden vergleichbare Produkte erhalten.

Beispiel 15

Ein 300 g/m$^{2}$ schweres Polyester-Wirrvlies wurde einseitig mit 40 Gew.%, bezogen auf den Faserstoff, mit dem nach Beispiel 1 bepudert, bei 160$^{o}$C angesintert und gegen ein unbehandeltes Polyester-Wirrvlies gleicher Qualität 4 Minuten lang bei 180$^{o}$C und 50 bar auf 1 mm Dicke verpreßt. Das erhaltene verfestigte Material war als Innenverkleidung geeignet. Die verbundenen Materialien zeichnen sich durch eine gute Haftfestigkeit und gute Naßpermanenz aus. Die Haftfestigkeit wurde gemäß DIN 53530 bestimmt. Es wurden folgende Werte erhalten:

## T a b e l l e   4

| Haftfestigkeit (DIN 53 530) | | behandelt | unbehandelt |
|---|---|---|---|
| Anfang | daN | < 9,3 | 0,2 |
| Nach einer 3-maligen Machinenkochwäsche 90° | daN | < 9,8 | 0 |

## Beispiel 15

Das nach Beispiel 3 hergestellte Pulverharz wurde mit 1 Gew.% Morpholinsalz der Amidosulfosäure als Härter gemischt und dieses Gemisch möglichst gleichmäßig auf ein 300 g/m² schweres Polyester-Wirrvlies einseitig aufgetragen, Auftragsmenge: 250%.     Anschließend wurde bei 160°C und 20 bar Druck 4 Minuten lang auf eine Dicke von 0,5 mm verpreßt. Es wurde ein Flächengebilde mit einer geschlossenen, glänzenden, wachstuchartigen, gegen Wasser und organische Lösungsmittel resistenten Oberfläche erhalten. Nach den bereits beschriebenen Methoden wurden der Formaldehydgehalt auf der Ware und die Reißefestigkeit bestimmt. Dabei wurden folgende Ergebnisse erhalten:

## T a b e l l e   5

| Prüfung | behandelt | unbehandelt |
|---|---|---|
| Formaldehyd in ppm auf der Ware | | |
| Japan. Law Nr. 112-73 | 29 | 8 |
| AATCC 112-75 | 501 | 11 |
| | | |
| Reißfestigkeit daN | | |
| Anfang | 25,2 | 20,4 |
| Maschinenwäsche 90°C, 1x | 27,0 | 22,1 |

PATENTANSPRÜCHE

1. Verfestigte Gebilde aus textilen Materialien, die durch Aufbringung eines Melamin-Formaldehyd-Vorkondensats und anschließende Einwirkung von erhöhter Temperatur und erhöhtem Druck verfestigt worden sind, dadurch gekennzeichnet, daß als Melamin-Formaldehyd-Vorkondensat ein solches mit einem Molverhältnis Melamin : Formaldehyd = 1 : (0,8 bis 1,26) verwendet worden ist.

2. Verfestigte Gebilde nach Anspruch 1, dadurch gekennzeichnet, daß ein Melamin-Formaldehyd-Vorkondensat mit einem Molverhältnis Melamin : Formaldehyd = 1 : (1,01 bis 1,2) verwendet worden ist.

3. Verfestigte Gebilde nach den Ansprüchen 1 und/oder 2, dadurch gekennzeichnet, daß ein Melamin-Formaldehyd-Vorkondensat verwendet worden ist, das, bezogen auf das Gesamtgewicht des eingesetzten Melamins und Formaldehyds, 0 bis 25 Gew.%, vorzugsweise 0 bis 15 Gew.%, eines Modifizierungsmittels enthält.

4. Verfestigte Gebilde nach einem oder mehreren der Ansprüche 1 bis 3, dadurch gekennzeichnet, daß als Modifizierungsmittel Carbonsäureamide, Sulfonamide, Glykole, Polyglykole, Polyglyzerin, Trimethylolpropan, Pentaerithrit, Zucker, polymere Zucker, Glykolester, Alkohole, $\varepsilon$-Caprolactam, Methylen-bis-formamid, Methylen-bis-acrylamid, Umsetzungsprodukt aus Formaldehyd, Formamid und $\varepsilon$-Caprolactam, Salze der Amidosulfosäure, Harnstoff, Thioharnstoff, Propylenharnstoff, Ethylenharnstoff, Glyoxalharnstoff, Acetoguanamin, Formoguanamin, Benzoguanamin, Adipobisguanamin verwendet werden.

5. Verfahren zur Herstellung der Gebilde eines oder mehrerer der Ansprüche 1 bis 4, dadurch gekennzeichnet, daß auf ein textiles Material, bezogen auf Festharz, 1 bis 250 Gew.%, vorzugsweise 10 bis 100 Gew.%, eines Melamin-Formaldehyd-Vorkondensats mit einem Molverhältnis Melamin : Formaldehyd = 1 : (0,8 bis 1,26), vorzugsweise 1 : (1,01 bis 1,2), in flüssiger oder fester Form, gegebenenfalls in Gegenwart von 0,1 bis 5 Gew.%, bezogen auf Festharz, eines latenten Härters aufgebracht wird und das Material, gegebenenfalls nach einer Zwischensinterung oder Zwischentrocknung, bei einem Überdruck von 1 bis 200 bar, vorzugsweise 2 bis 100 bar, und Temperaturen von 130 bis 220°C, vorzugsweise 150 bis 180°C, verpreßt und gegebenenfalls dabei gleichzeitig dreidimensional verformt wird.

6. Verfahren nach Anspruch 5, dadurch gekennzeichnet, daß das Bindemittel in Form eines Pulvers auf das Material aufgebracht und vorzugsweise vor dem Verpressungsvorgang angesintert wird.

7. Melamin-Formaldehyd-Vorkondensate mit einem Molverhältnis Melamin : Formaldehyd = 1 : (0,8 bis 1,26) und einem Gehalt von mehr als 1,0 Gew.% eines Alkali- oder Erdalkalisalzes der Amidosulfosäure.

8. Melamin-Formaldehyd-Vorkondensate nach Anspruch 7, gekennzeichnet durch ein Molverhältnis Melamin : Formaldehyd = 1 : (1,01 bis 1,2).

9. Melamin-Formaldehyd-Vorkondensate nach den Ansprüchen 7 oder 8, gekennzeichnet durch einen Gehalt von mehr als 7,5 Gew.% der Alkali- oder Erdalkalisalze der Amidosulfosäure.

10. Verfahren zur Herstellung der Melamin-Formaldehyd-Vorkondensate nach einem oder mehreren der Ansprüche 7 bis 9, dadurch gekennzeichnet, daß Melamin in wäßriger Lösung bzw. Suspension mit Formaldehyd im Molverhältnis 1 : (0,8 bis 1,26) vorzugsweise 1 : (1,01 bis 1,2) und bei einem pH-Wert von 7 bis 11, vorzugsweise 7,5 bis 10,5, in Gegenwart von 1 bis 25 Gew.%, vorzugsweise 1 bis 15 Gew.%, Modifizierungsmittel, dabei mindestens 1,0 % eines Alkali- oder Erdalkalisalzes der Amidosulfosäure auf Temperaturen von 105 bis 160$^{o}$C, vorzugsweise auf 110 bis 130$^{o}$C, erhitzt wird.

## Europäisches Patentamt

# EUROPÄISCHER RECHERCHENBERICHT

0062179

Nummer der Anmeldung

EP 82 10 1991

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | CH-A- 319 245 (CIBA) <br> * Patentansprüche; Seite 3, Zeilen 11-12 * | 1-10 | C 08 J 5/24 <br> D 06 N 3/12 <br> D 04 H 1/60 <br> D 04 H 1/64 <br> C 08 G 12/32 |
| Y | FR-A-2 295 074 (CASSELLA) <br> * Patentansprüche; Seite 5, Zeilen 8-9; Seite 7, Zeilen 16-25 * | 1-10 | C 08 L 61/28 |
| Y | FR-A- 974 513 (AM. CYANAMID) <br> * Zusammenfassung; Beispiel 3; Seite 3, rechte Spalte, Absatz 3 * | 1-10 | |
| Y | EP-A-0 006 148 (CASSELLA) <br> * Patentansprüche; Seite 6, Zeilen 1-6 * | 1-10 | |
| A | DE-A-2 604 120 (HENKEL) <br> * Patentansprüche * | 1 | |
| A | FR-A-2 150 493 (CASSELLA) <br> * Patentansprüche * | 1 | |

RECHERCHIERTE SACHGEBIETE (Int. Cl. ³)

C 08 J
D 06 N
D 04 H
C 08 G
C 08 L

Der vorliegende Recherchenbericht wurde für alle Patentansprüche erstellt.

| Recherchenort <br> DEN HAAG | Abschlußdatum der Recherche <br> 06-07-1982 | Prüfer <br> DERAEDT G. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82